(19) Europäisches Patentamt
European Patent Office
Office européen des brevets

(11) EP 4 815 458 A1

(12) EUROPEAN PATENT APPLICATION
published in accordance with Art. 153(4) EPC

(43) Date of publication:
**30.09.2026 Bulletin 2026/40**

(21) Application number: **24907927.8**

(22) Date of filing: **06.12.2024**

(51) International Patent Classification (IPC):
***H04N 19/61*** *(2014.01)* ***H04N 19/147*** *(2014.01)*
***H04N 19/70*** *(2014.01)* ***H04N 19/176*** *(2014.01)*

(52) Cooperative Patent Classification (CPC):
**H04N 19/147; H04N 19/176; H04N 19/61; H04N 19/70**

(86) International application number:
**PCT/KR2024/019984**

(87) International publication number:
**WO 2025/135643 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187009**

(71) Applicants:
- **Hyundai Motor Company**
  **Seoul 06797 (KR)**
- **Kia Corporation**
  **Seoul 06797 (KR)**

(72) Inventors:
- **CHOI, Jungah**
  **Hwaseong-si Gyeonggi-do 18280 (KR)**
- **HEO, Jin**
  **Hwaseong-si Gyeonggi-do 18280 (KR)**
- **PARK, Seung Wook**
  **Hwaseong-si Gyeonggi-do 18280 (KR)**

(74) Representative: **Isarpatent**
**Patent- und Rechtsanwälte Part G mbB**
**Friedrichstrasse 31**
**80801 München (DE)**

# (54) IMAGE ENCODING/DECODING METHOD AND APPARATUS, AND RECORDING MEDIUM HAVING BITSTREAM STORED THEREIN

(57) An image encoding/decoding method and apparatus, a recording medium for storing a bitstream, and a transmission method are provided. The image decoding method includes deriving a prediction mode of a current block, determining a transform set of the current block based on the prediction mode, and performing inverse transform on the current block based on the transform set, wherein the transform set may be determined as any one of a first transform set for first intra prediction, a second transform set for second intra prediction, and a third transform set for inter prediction.

FIG. 7

START
S700
DERIVE PREDICTION MODE OF CURRENT BLOCK
S710
DETERMINE TRANSFORM SET OF CURRENT BLOCK BASED ON PREDICTION MODE
S720
PERFORM INVERSE TRANSFORM ON CURRENT BLOCK BASED ON TRANSFORM SET
END

EP 4 815 458 A1

## Description

## Technical Field

The present invention relates to an image encoding/decoding method and apparatus and a recording medium for storing a bitstream. Particularly, the present invention relates to an image encoding/decoding method and apparatus based on a method of determining a transform set and a recording medium for storing a bitstream.

## Background Art

Recently, the demand for high resolution and high-quality images such as ultra-high definition (UHD) images increases in various application fields. As image data becomes higher in resolution and quality, the amount of data increases relatively compared to existing image data. Therefore, when transmitting such image data using existing media such as wired or wireless broadband channels, or when storing it using existing storage media, both transmission and storage costs increase. To solve these problems that occur as image data becomes higher in resolution and quality, a high-efficiency image encoding/decoding technique is required for images with higher resolution and image quality.

The application of a conventional non-separable transform has been limited since the conventional non-separable transform is applied only to an intra prediction block and a transform kernel and an optimized transform structure are difficult to design.

Disclosure

## Technical Problem

An object of the present invention is to provide a method and apparatus for encoding/decoding an image with improved encoding/decoding efficiency.

Another object of the present invention is to provide a recording medium for storing a bitstream that is generated by a method or apparatus for decoding an image according to the present invention.

Another object of the present invention is to provide a method for determining a transform set and a transform kernel and therefore to solve the above problem.

## Technical Solution

An image decoding method according to an embodiment of the present invention includes deriving a prediction mode of a current block, determining a transform set of the current block based on the prediction mode, and performing an inverse transform on the current block based on the transform set, wherein the transform set may be determined as any one of a first transform set for first intra prediction, a second transform set for second intra prediction, and a third transform set for inter prediction.

In the image decoding method, when the prediction mode is an intra template matching mode, the transform set may be determined as the third transform set.

In the image decoding method, the transform set may be a transform set of a non-separable primary transform.

In the image decoding method, when the prediction mode is an intra block copy mode, the transform set may be determined as the third transform set.

In the image decoding method, the first intra prediction may include non-directional intra prediction and directional intra prediction, and the second intra prediction may include spatial geometric prediction mode (SGPM) intra prediction.

In the image decoding method, the performing of the inverse transform may include determining a transform kernel of the current block from among transform kernels included in the transform set and performing an inverse transform based on the transform kernel.

In the image decoding method, the determining of the transform kernel may include deriving a transform kernel determination intra prediction mode and determining the transform kernel based on the transform kernel determination intra prediction mode.

In the image decoding method, the transform kernel determination intra prediction mode may be derived based on directionality information of some pixels included in a prediction block of the current block.

In the image decoding method, the transform kernel may be a transform kernel having the smallest distortion among transform kernels included in the transform set.

In the image decoding method, when the prediction mode of the current block is any one of an intra template matching mode and an intra block copy mode, obtaining intra prediction mode utilization information indicating whether an

intra prediction mode is used to determine the transform kernel is further included, and when the intra prediction mode utilization information indicates that the intra prediction mode is used, the determining of the transform kernel may include deriving a transform kernel determination intra prediction mode and determining the transform kernel based on the transform kernel determination intra prediction mode.

In the image decoding method, when the current block is partitioned into a first sub-block and a second sub-block according to a partitioning boundary, the transform set may be determined as the second transform set.

In the image decoding method, when the current block is partitioned into a first sub-block and a second sub-block according to a partitioning boundary, the transform kernel may be determined based on a prediction mode of the first sub-block and a prediction mode of the second sub-block.

In the image decoding method, when the current block is partitioned into a first sub-block and a second sub-block according to a partitioning boundary, obtaining sub-block prediction mode utilization information indicating whether the prediction mode of the first sub-block and the prediction mode of the second sub-block are used to determine the transform kernel is further included, and when the sub-block prediction mode utilization information indicates that the prediction mode of the first sub-block and the prediction mode of the second sub-block are used, the transform kernel may be determined based on the prediction mode of the first sub-block and the prediction mode of the second sub-block.

In the image decoding method, when the prediction mode of the current block is a spatial combined intra-intra prediction (SCIIP) mode, the transform kernel of the current block may be determined based on a first intra prediction mode of the SCIIP mode and a second intra prediction mode of the SCIIP mode.

An image encoding method according to an embodiment of the present invention includes determining a prediction mode of a current block, determining a transform set of the current block based on the prediction mode, and perform a transform on the current block based on the transform set, wherein the transform set may be determined as any one of a first transform set for first intra prediction, a second transform set for second intra prediction, and a third transform set for inter prediction.

A non-transitory computer-readable recording medium for storing a bitstream generated by an image encoding method according to an embodiment of the present invention may store a bitstream generated by the image encoding method.

A method for transmitting a bitstream generated by an image encoding method according to an embodiment of the present invention includes transmitting the bitstream, and the image encoding method may include determining a prediction mode of a current block, determining a transform set of the current block based on the prediction mode, and performing a transform on the current block based on the transform set, wherein the transform set is determined as any one of a first transform set for first intra prediction, a second transform set for second intra prediction, and a third transform set for inter prediction.

The features briefly summarized above with respect to the present disclosure are provided as an example only to explain the detailed description and are not construed to limit the scope of the present disclosure.

## Advantageous Effects

According to the present invention, a method and apparatus for encoding/decoding an image with improved encoding/decoding efficiency may be provided.

In addition, according to the present invention, a method for determining a transform set for inverse transform of a current block may be provided.

In addition, according to the present invention, a method for determining a transform kernel for inverse transform of a current block may be provided.

In addition, according to the present invention, a suitable transform set and transform kernel may be determined so that transform efficiency may be improved.

Effects obtainable from the present disclosure are not limited to the above-mentioned effects, and other effects that are not mentioned will be clearly understood by those skilled in the art from the following description.

## Description of Drawings

FIG. 1 is a block diagram showing a configuration of an encoding apparatus according to an embodiment of the present invention.

FIG. 2 is a block diagram showing a configuration of a decoding apparatus according to an embodiment of the present invention.

FIG. 3 is a diagram schematically showing a video coding system to which the present invention is applicable.

FIG. 4 is a view for describing a method of determining a transform set when a prediction mode of a current block is an

intra template matching mode according to an embodiment of the present invention.

FIG. 5 is a view for describing a method of determining a transform set when a prediction mode of a current block is an intra block copy mode according to an embodiment of the present invention.

FIG. 6 is a view for describing a method of determining a transform set and a transform kernel in a spatial geometric partitioning mode (SGPM) according to an embodiment of the present invention.

FIG. 7 is a flowchart for describing a method of determining a transform set according to an embodiment of the present invention.

FIG. 8 is a view for illustrating a content streaming system to which an embodiment according to the present invention is applicable.

## Best Mode

An image decoding method according to an embodiment of the present invention includes deriving a prediction mode of a current block, determining a transform set of the current block based on the prediction mode, and performing inverse transform on the current block based on the transform set, wherein the transform set may be determined as any one of a first transform set for first intra prediction, a second transform set for second intra prediction, and a third transform set for inter prediction.

## Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure. Similar reference numerals in the drawings indicate the same or similar functions throughout various aspects. The shapes and sizes of elements in the drawings may be provided by way of example for a clearer description. The detailed description of the exemplary embodiments described below refers to the accompanying drawings, which illustrate specific embodiments by way of example. These embodiments are described in sufficient detail to enable those skilled in the art to practice the embodiments. It should be understood that the various embodiments are different from each other, but are not necessarily mutually exclusive. For example, specific shapes, structures, and characteristics described herein may be implemented in other embodiments without departing from the spirit and scope of the present disclosure with respect to one embodiment. It should also be understood that the positions or arrangements of individual components within each disclosed embodiment may be changed without departing from the spirit and scope of the embodiment. Accordingly, the detailed description set forth below is not intended to be limiting, and the scope of the exemplary embodiments is defined only by the appended claims, along with the full scope of equivalents to which such claims are entitled, if properly described.

In the present disclosure, the terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term is and/or includes a combination of a plurality of related described items or any item among a plurality of related described items.

The components shown in the embodiments of the present disclosure are independently depicted to indicate different characteristic functions, and do not mean that each component is formed as a separate hardware or software configuration unit. That is, each component is listed and included as a separate component for convenience of explanation, and at least two of the components may be combined to form a single component, or one component may be divided into multiple components to perform a function, and embodiments in which components are integrated and embodiments in which each component is divided are also included in the scope of the present disclosure as long as they do not deviate from the essence of the present disclosure.

The terminology used in the present disclosure is only used to describe specific embodiments and is not intended to limit the present disclosure. The singular expression includes the plural expression unless the context clearly indicates otherwise. In addition, some components of the present disclosure are not essential components that perform essential functions in the present disclosure and may be optional components only for improving performance. The present disclosure may be implemented by including only essential components for implementing the essence of the present disclosure excluding components only used for improving performance, and a structure including only essential components excluding optional components only used for improving performance is also included in the scope of the present disclosure.

In an embodiment, the term "at least one" may mean one of a number greater than or equal to 1, such as 1, 2, 3, and 4. In an embodiment, the term "a plurality of" may mean one of a number greater than or equal to 2, such as 2, 3, and 4.

Hereinafter, embodiments of the present disclosure will be specifically described with reference to the drawings. In describing the embodiments of this specification, if it is determined that a detailed description of a related known configuration or function may obscure the subject matter of this specification, the detailed description will be omitted, and the same reference numerals will be used for the same components in the drawings, and repeated descriptions of the same components will be omitted.

Description of terms

Hereinafter, "image" may mean one picture constituting a video, and may also refer to the video itself. For example, "encoding and/or decoding of an image" may mean "encoding and/or decoding of a video," and may also mean "encoding and/or decoding of one of images constituting the video."

Hereinafter, "moving image" and "video" may be used with the same meaning and may be used interchangeably. In addition, a target image may be an encoding target image that is a target of encoding and/or a decoding target image that is a target of decoding. In addition, the target image may be an input image input to an encoding apparatus and may be an input image input to a decoding apparatus. Here, the target image may have the same meaning as a current image.

Hereinafter, encoder and image encoding apparatus may be used with the same meaning and may be used interchangeably.

Hereinafter, decoder and image decoding apparatus may be used with the same meaning and may be used interchangeably.

Hereinafter, "image", "picture", "frame" and "screen" may be used with the same meaning and may be used interchangeably.

Hereinafter, a "target block" may be an encoding target block that is a target of encoding and/or a decoding target block that is a target of decoding. In addition, the target block may be a current block that is a target of current encoding and/or decoding. For example, "target block" and "current block" may be used with the same meaning and may be used interchangeably.

Hereinafter, "block" and "unit" may be used with the same meaning and may be used interchangeably. In addition, "unit" may mean including a luma component block and a chroma component block corresponding thereto in order to distinguish it from a block. For example, a coding tree unit (CTU) may be composed of one luma component (Y) coding tree block (CTB) and two chroma component (Cb, Cr) coding tree blocks related to it.

Hereinafter, "sample", "picture element" and "pixel" may be used with the same meaning and may be used interchangeably. Herein, a sample may represent a basic unit that constitutes a block.

Hereinafter, "inter" and "inter-screen" may be used with the same meaning and can be used interchangeably.

Hereinafter, "intra" and "in-screen" may be used with the same meaning and can be used interchangeably.

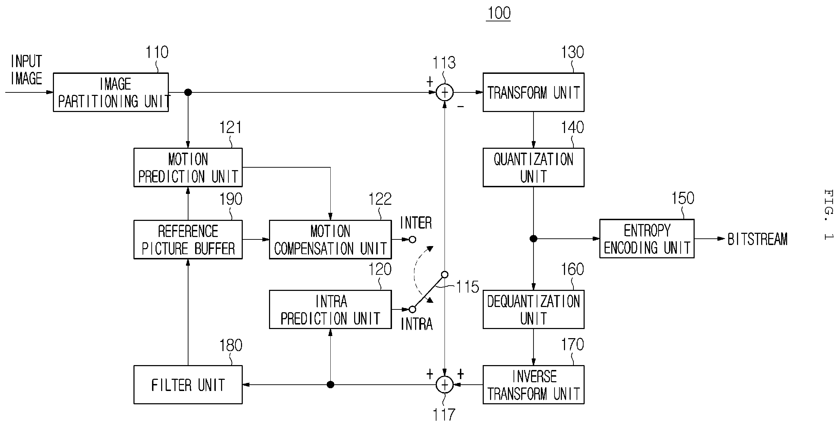

FIG. 1 is a block diagram showing a configuration of an encoding apparatus according to an embodiment of the present disclosure.

The encoding apparatus 100 may be an encoder, a video encoding apparatus, or an image encoding apparatus. A video may include one or more images. The encoding apparatus 100 may sequentially encode one or more images.

Referring to FIG. 1, the encoding apparatus 100 may include an image partitioning unit 110, an intra prediction unit 120, a motion prediction unit 121, a motion compensation unit 122, a switch 115, a subtractor 113, a transform unit 130, a quantization unit 140, an entropy encoding unit 150, a dequantization unit 160, an inverse transform unit 170, an adder 117, a filter unit 180 and a reference picture buffer 190.

In addition, the encoding apparatus 100 may generate a bitstream including information encoded through encoding of an input image, and output the generated bitstream. The generated bitstream may be stored in a computer-readable recording medium, or may be streamed through a wired/wireless transmission medium.

The image partitioning unit 110 may partition the input image into various forms to increase the efficiency of video encoding/decoding. That is, the input video is composed of multiple pictures, and one picture may be hierarchically partitioned and processed for compression efficiency, parallel processing, etc. For example, one picture may be partitioned into one or multiple tiles or slices, and then partitioned again into multiple CTUs (Coding Tree Units). Alternatively, one picture may first be partitioned into multiple sub-pictures defined as groups of rectangular slices, and each sub-picture may be partitioned into the tiles/slices. Here, the sub-picture may be utilized to support the function of partially independently encoding/decoding and transmitting the picture. Since multiple sub-pictures may be individually reconstructed, it has the advantage of easy editing in applications that configure multi-channel inputs into one picture. In addition, a tile may be divided horizontally to generate bricks. Here, the brick may be utilized as the basic unit of parallel processing within the picture. In addition, one CTU may be recursively partitioned into quad trees (QTs), and the terminal node of the partition may be defined as a CU (Coding Unit). The CU may be partitioned into a PU (Prediction Unit), which is a prediction unit, and a TU (Transform Unit), which is a transform unit, to perform prediction and partition. Meanwhile, the CU may be utilized as the prediction unit and/or the transform unit itself. Here, for flexible partition, each CTU may be recursively partitioned into multi-type trees (MTTs) as well as quad trees (QTs). The partition of the CTU into multi-type

trees may start from the terminal node of the QT, and the MTT may be composed of a binary tree (BT) and a triple tree (TT). For example, the MTT structure may be classified into a vertical binary split mode (SPLIT_BT_VER), a horizontal binary split mode (SPLIT_BT_HOR), a vertical ternary split mode (SPLIT_TT_VER), and a horizontal ternary split mode (SPLIT_TT_HOR). In addition, a minimum block size (MinQTSize) of the quad tree of the luma block during partition may be set to 16x16, a maximum block size (MaxBtSize) of the binary tree may be set to 128x128, and a maximum block size (MaxTtSize) of the triple tree may be set to 64x64. In addition, a minimum block size (MinBtSize) of the binary tree and a minimum block size (MinTtSize) of the triple tree may be specified as 4x4, and the maximum depth (MaxMttDepth) of the multi-type tree may be specified as 4. In addition, in order to increase the encoding efficiency of the I slice, a dual tree that differently uses CTU partition structures of luma and chroma components may be applied. On the other hand, in P and B slices, the luma and chroma CTBs (Coding Tree Blocks) within the CTU may be partitioned into a single tree that shares the coding tree structure.

The encoding apparatus 100 may perform encoding on the input image in the intra mode and/or the inter mode. Alternatively, the encoding apparatus 100 may perform encoding on the input image in a third mode (e.g., IBC mode, Palette mode, etc.) other than the intra mode and the inter mode. However, if the third mode has functional characteristics similar to the intra mode or the inter mode, it may be classified as the intra mode or the inter mode for convenience of explanation. In the present disclosure, the third mode will be classified and described separately only when a specific description thereof is required.

When the intra mode is used as the prediction mode, the switch 115 may be switched to intra, and when the inter mode is used as the prediction mode, the switch 115 may be switched to inter. Here, the intra mode may mean an intra prediction mode, and the inter mode may mean an inter prediction mode. The encoding apparatus 100 may generate a prediction block for an input block of the input image. In addition, the encoding apparatus 100 may encode a residual block using a residual of the input block and the prediction block after the prediction block is generated. The input image may be referred to as a current image which is a current encoding target. The input block may be referred to as a current block which is a current encoding target or an encoding target block.

When a prediction mode is an intra mode, the intra prediction unit 120 may use a sample of a block that has been already encoded/decoded around a current block as a reference sample. The intra prediction unit 120 may perform spatial prediction for the current block by using the reference sample, or generate prediction samples of an input block through spatial prediction. Herein, the intra prediction may mean in-screen prediction.

As an intra prediction method, non-directional prediction modes such as DC mode and Planar mode and directional prediction modes (e.g., 65 directions) may be applied. Here, the intra prediction method may be expressed as an intra prediction mode or an in-screen prediction mode.

When a prediction mode is an inter mode, the motion prediction unit 121 may retrieve a region that best matches with an input block from a reference image in a motion prediction process, and derive a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 122 may generate a prediction block of the current block by performing motion compensation using a motion vector. Herein, inter prediction may mean inter-screen prediction or motion compensation.

When the value of the motion vector is not an integer, the motion prediction unit 121 and the motion compensation unit 122 may generate the prediction block by applying an interpolation filter to a partial region of the reference picture. In order to perform inter prediction or motion compensation, it may be determined whether the motion prediction and motion compensation mode of the prediction unit included in the coding unit is one of a skip mode, a merge mode, an advanced motion vector prediction (AMVP) mode, and an intra block copy (IBC) mode based on the coding unit and inter prediction or motion compensation may be performed according to each mode.

In addition, based on the above inter prediction method, an AFFINE mode of sub-PU based prediction, an SbTMVP (Subblock-based Temporal Motion Vector Prediction) mode, an MMVD (Merge with MVD) mode of PU-based prediction, and a GPM (Geometric Partitioning Mode) mode may be applied. In addition, in order to improve the performance of each mode, HMVP (History based MVP), PAMVP (Pairwise Average MVP), CIIP (Combined Intra/Inter Prediction), AMVR (Adaptive Motion Vector Resolution), BDOF (Bi-Directional Optical-Flow), BCW (Bi-predictive with CU Weights), LIC (Local Illumination Compensation), TM (Template Matching), OBMC (Overlapped Block Motion Compensation), etc. may be applied.

Among these, the AFFINE mode is a technology that is used in both AMVP and MERGE modes and also has high encoding efficiency. In the existing video coding standard, since MC (Motion Compensation) is performed by considering only the parallel movement of blocks, it has a disadvantage in that it cannot properly compensate for motions that occur in reality, such as zoom-in/out and rotation. To supplement this, a four-parameter affine motion model using two control point motion vectors (CPMVs) and a six-parameter affine motion model using three control point motion vectors may be used and applied to inter prediction. Here, CPMV is a vector representing the affine motion model of one of the upper left, upper right, and lower left of the current block.

The subtractor 113 may generate a residual block by using a difference between an input block and a prediction block. The residual block may be called a residual signal. The residual signal may mean a difference between an original signal and a prediction signal. Alternatively, the residual signal may be a signal generated by transforming or quantizing, or transforming and quantizing a difference between the original signal and the prediction signal. The residual block may be a residual signal of a block unit.

The transform unit 130 may generate a transform coefficient by performing transform on a residual block, and output the generated transform coefficient. Herein, the transform coefficient may be a coefficient value generated by performing transform on the residual block. When a transform skip mode is applied, the transform unit 130 may skip transform of the residual block.

A quantized level may be generated by applying quantization to the transform coefficient or to the residual signal. Hereinafter, the quantized level may also be called a transform coefficient in embodiments.

For example, a 4x4 luma residual block generated through intra prediction is transformed using a base vector based on DST (Discrete Sine Transform), and transform may be performed on the remaining residual block using a base vector based on DCT (Discrete Cosine Transform). In addition, a transform block is partitioned into a quad tree shape for one block using RQT (Residual Quad Tree) technology, and after performing transform and quantization on each transformed block partitioned through RQT, a coded block flag (cbf) may be transmitted to increase encoding efficiency when all coefficients become 0.

As another alternative, the Multiple Transform Selection (MTS) technique, which selectively uses multiple transform bases to perform transform, may be applied. That is, instead of partitioning a CU into TUs through RQT, a function similar to TU partition may be performed through the sub-block Transform (SBT) technique. Specifically, SBT is applied only to inter prediction blocks, and unlike RQT, the current block may be partitioned into ½ or ¼ sizes in the vertical or horizontal direction and then transform may be performed on only one of the blocks. For example, if it is partitioned vertically, transform may be performed on the leftmost or rightmost block, and if it is partitioned horizontally, transform may be performed on the topmost or bottommost block.

In addition, LFNST (Low Frequency Non-Separable Transform), a secondary transform technique that additionally transforms the residual signal transformed into the frequency domain through DCT or DST, may be applied. LFNST additionally performs transform on the low-frequency region of 4x4 or 8x8 in the upper left, so that the residual coefficients may be concentrated in the upper left.

The quantization unit 140 may generate a quantized level by quantizing the transform coefficient or the residual signal according to a quantization parameter (QP), and output the generated quantized level. Herein, the quantization unit 140 may quantize the transform coefficient by using a quantization matrix.

For example, a quantizer using QP values of 0 to 51 may be used. Alternatively, if the image size is larger and high encoding efficiency is required, the QP of 0 to 63 may be used. Also, a DQ (Dependent Quantization) method using two quantizers instead of one quantizer may be applied. DQ performs quantization using two quantizers (e.g., Q0 and Q1), but even without signaling information about the use of a specific quantizer, the quantizer to be used for the next transform coefficient may be selected based on the current state through a state transition model.

The entropy encoding unit 150 may generate a bitstream by performing entropy encoding according to a probability distribution on values calculated by the quantization unit 140 or on coding parameter values calculated when performing encoding, and output the bitstream. The entropy encoding unit 150 may perform entropy encoding of information on a sample of an image and information for decoding an image. For example, the information for decoding the image may include a syntax element.

When entropy encoding is applied, symbols are represented so that a smaller number of bits are assigned to a symbol having a high occurrence probability and a larger number of bits are assigned to a symbol having a low occurrence probability, and thus, the size of bit stream for symbols to be encoded may be decreased. The entropy encoding unit 150 may use an encoding method, such as exponential Golomb, context-adaptive variable length coding (CAVLC), context-adaptive binary arithmetic coding (CABAC), etc., for entropy encoding. For example, the entropy encoding unit 150 may perform entropy encoding by using a variable length coding/code (VLC) table. In addition, the entropy encoding unit 150 may derive a binarization method of a target symbol and a probability model of a target symbol/bin, and perform arithmetic coding by using the derived binarization method, and a context model.

In relation to this, when applying CABAC, in order to reduce the size of the probability table stored in the decoding apparatus, a table probability update method may be changed to a table update method using a simple equation and applied. In addition, two different probability models may be used to obtain more accurate symbol probability values.

In order to encode a transform coefficient level (quantized level), the entropy encoding unit 150 may change a two-dimensional block form coefficient into a one-dimensional vector form through a transform coefficient scanning method.

A coding parameter may include information (flag, index, etc.) encoded in the encoding apparatus 100 and signaled to the decoding apparatus 200, such as syntax element, and information derived in the encoding or decoding process, and may mean information required when encoding or decoding an image.

Herein, signaling the flag or index may mean that a corresponding flag or index is entropy encoded and included in a bitstream in an encoder, and may mean that the corresponding flag or index is entropy decoded from a bitstream in a decoder.

The encoded current image may be used as a reference image for another image to be processed later. Therefore, the encoding apparatus 100 may reconstruct or decode the encoded current image again and store the reconstructed or decoded image as a reference image in the reference picture buffer 190.

A quantized level may be dequantized in the dequantization unit 160, or may be inversely transformed in the inverse transform unit 170. A dequantized and/or inversely transformed coefficient may be added with a prediction block through the adder 117. Herein, the dequantized and/or inversely transformed coefficient may mean a coefficient on which at least one of dequantization and inverse transform is performed, and may mean a reconstructed residual block. The dequantization unit 160 and the inverse transform unit 170 may be performed as an inverse process of the quantization unit 140 and the transform unit 130.

The reconstructed block may pass through the filter unit 180. The filter unit 180 may apply all or some filtering techniques among a deblocking filter, a sample adaptive offset (SAO), an adaptive loop filter (ALF), a bilateral filter (BIF), luma mapping with chroma scaling (LMCS), etc. to a reconstructed sample, a reconstructed block or a reconstructed image. The filter unit 180 may be called an in-loop filter. In this case, the in-loop filter is also used as name excluding LMCS.

The deblocking filter may remove block distortion generated in boundaries between blocks. In order to determine whether or not to apply a deblocking filter, whether or not to apply a deblocking filter to a current block may be determined based on samples included in several rows or columns which are included in the block. When a deblocking filter is applied to a block, a different filter may be applied according to a required deblocking filtering strength.

In order to compensate for encoding error using sample adaptive offset, a proper offset value may be added to a sample value. The sample adaptive offset may correct an offset of a deblocked image from an original image by a sample unit. A method of partitioning a sample included in an image into a predetermined number of regions, determining a region to which an offset is applied, and applying the offset to the determined region, or a method of applying an offset in consideration of edge information on each sample may be used.

A bilateral filter (BIF) may also correct the offset from the original image on a sample-by-sample basis for the image on which deblocking has been performed.

The adaptive loop filter may perform filtering based on a comparison result of the reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the adaptive loop filter to be applied to each block may vary.

In LMCS (Luma Mapping with Chroma Scaling), luma mapping (LM) means remapping luma values through a piece-wise linear model, and chroma scaling (CS) means a technique for scaling the residual value of the chroma component according to the average luma value of the prediction signal. In particular, LMCS may be utilized as an HDR correction technique that reflects the characteristics of HDR (High Dynamic Range) images.

The reconstructed block or the reconstructed image having passed through the filter unit 180 may be stored in the reference picture buffer 190. A reconstructed block that has passed through the filter unit 180 may be a part of a reference image. That is, the reference image is a reconstructed image composed of reconstructed blocks that have passed through the filter unit 180. The stored reference image may be used later in inter prediction or motion compensation.

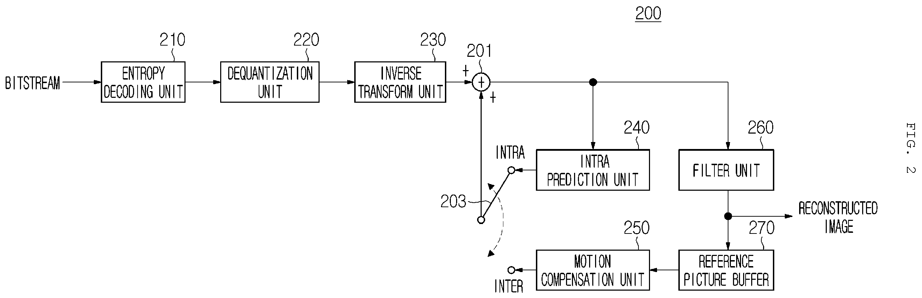

FIG. 2 is a block diagram showing a configuration of a decoding apparatus according to an embodiment of the present disclosure.

A decoding apparatus 200 may be a decoder, a video decoding apparatus, or an image decoding apparatus.

Referring to FIG. 2, the decoding apparatus 200 may include an entropy decoding unit 210, a dequantization unit 220, an inverse transform unit 230, an intra prediction unit 240, a motion compensation unit 250, an adder 201, a switch 203, a filter unit 260, and a reference picture buffer 270.

The decoding apparatus 200 may receive a bitstream output from the encoding apparatus 100. The decoding apparatus 200 may receive a bitstream stored in a computer-readable recording medium, or may receive a bitstream that is streamed through a wired/wireless transmission medium. The decoding apparatus 200 may decode the bitstream in an intra mode or an inter mode. In addition, the decoding apparatus 200 may generate a reconstructed image generated through decoding or a decoded image, and output the reconstructed image or decoded image.

When a prediction mode used for decoding is an intra mode, the switch 203 may be switched to intra. Alternatively, when a prediction mode used for decoding is an inter mode, the switch 203 may be switched to inter.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block and the prediction block. The decoding target block may be called a current block.

The entropy decoding unit 210 may generate symbols by entropy decoding the bitstream according to a

probability distribution. The generated symbols may include a symbol of a quantized level form. Herein, an entropy decoding method may be an inverse process of the entropy encoding method described above.

The entropy decoding unit 210 may change a one-dimensional vector-shaped coefficient into a two-dimensional block-shaped coefficient through a transform coefficient scanning method to decode a transform coefficient level (quantized level).

A quantized level may be dequantized in the dequantization unit 220, or inversely transformed in the inverse transform unit 230. The quantized level may be a result of dequantization and/or inverse transform, and may be generated as a reconstructed residual block. Herein, the dequantization unit 220 may apply a quantization matrix to the quantized level. The dequantization unit 220 and the inverse transform unit 230 applied to the decoding apparatus may apply the same technology as the dequantization unit 160 and inverse transform unit 170 applied to the aforementioned encoding apparatus.

When an intra mode is used, the intra prediction unit 240 may generate a prediction block by performing, on the current block, spatial prediction that uses a sample value of a block which has been already decoded around a decoding target block. The intra prediction unit 240 applied to the decoding apparatus may apply the same technology as the intra prediction unit 120 applied to the aforementioned encoding apparatus.

When an inter mode is used, the motion compensation unit 250 may generate a prediction block by performing, on the current block, motion compensation that uses a motion vector and a reference image stored in the reference picture buffer 270. The motion compensation unit 250 may generate a prediction block by applying an interpolation filter to a partial region within a reference image when the value of the motion vector is not an integer value. In order to perform motion compensation, it may be determined whether the motion compensation method of the prediction unit included in the corresponding coding unit is a skip mode, a merge mode, an AMVP mode, or a current picture reference mode based on the coding unit, and motion compensation may be performed according to each mode. The motion compensation unit 250 applied to the decoding apparatus may apply the same technology as the motion compensation unit 122 applied to the encoding apparatus described above.

The adder 201 may generate a reconstructed block by adding the reconstructed residual block and the prediction block. The filter unit 260 may apply at least one of inverse-LMCS, a deblocking filter, a sample adaptive offset, and an adaptive loop filter to the reconstructed block or reconstructed image. The filter unit 260 applied to the decoding apparatus may apply the same filtering technology as that applied to the filter unit 180 applied to the aforementioned encoding apparatus.

The filter unit 260 may output the reconstructed image. The reconstructed block or reconstructed image may be stored in the reference picture buffer 270 and used for inter prediction. A reconstructed block that has passed through the filter unit 260 may be a part of a reference image. That is, a reference image may be a reconstructed image composed of reconstructed blocks that have passed through the filter unit 260. The stored reference image may be used later in inter prediction or motion compensation.

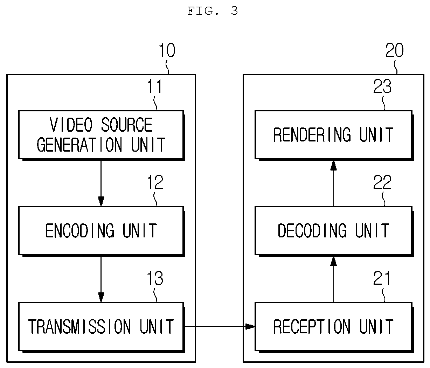

FIG. 3 is a diagram schematically showing a video coding system to which the present disclosure is applicable.

A video coding system according to an embodiment may include an encoding apparatus 10 and a decoding apparatus 20. The encoding apparatus 10 may transmit encoded video and/or image information or data to the decoding apparatus 20 in the form of a file or streaming through a digital storage medium or a network.

The encoding apparatus 10 according to an embodiment may include a video source generation unit 11, an encoding unit 12, and a transmission unit 13. The decoding apparatus 20 according to an embodiment may include a reception unit 21, a decoding unit 22, and a rendering unit 23. The encoding unit 12 may be called a video/image encoding unit, and the decoding unit 22 may be called a video/image decoding unit. The transmission unit 13 may be included in the encoding unit 12. The reception unit 21 may be included in the decoding unit 22. The rendering unit 23 may include a display unit, and the display unit may be configured as a separate device or an external component.

The video source generation unit 11 may obtain the video/image through a process of capturing, synthesizing, or generating the video/image. The video source generation unit 11 may include a video/image capture device and/or a video/image generation device. The video/image capture device may include, for example, one or more cameras, a video/image archive including previously captured video/image, etc. The video/image generation device may include, for example, a computer, a tablet, and a smartphone, etc., and may (electronically) generate the video/image. For example, a virtual video/image may be generated through a computer, etc., in which case the video/image capture process may be replaced with a process of generating related data.

The encoding unit 12 may encode the input video/image. The encoding unit 12 may perform a series of procedures such as prediction, transform, and quantization for compression and encoding efficiency. The encoding unit 12 may output encoded data (encoded video/image information) in the form of a bitstream. The detailed configuration of the encoding unit 12 may also be configured in the same manner as the encoding apparatus 100 of FIG. 1 described above.

The transmission unit 13 may transmit encoded video/image information or data output in the form of a bitstream to the reception unit 21 of the decoding apparatus 20 through a digital storage medium or a network in the form of a file or streaming. The digital storage medium may include various storage media such as USB, SD, CD, DVD, Blu-ray, HDD,

SSD, etc. The transmission unit 13 may include an element for generating a media file through a predetermined file format and may include an element for transmission through a broadcasting/communication network. The reception unit 21 may extract/receive the bitstream from the storage medium or the network and transmit it to the decoding unit 22.

The decoding unit 22 may decode the video/image by performing a series of procedures such as dequantization, inverse transform, and prediction corresponding to the operation of the encoding unit 12. The detailed configuration of the decoding unit 22 may also be configured in the same manner as the above-described decoding apparatus 200 of FIG. 2.

The rendering unit 23 may render the decoded video/image. The rendered video/image may be displayed through the display unit.

In the present specification, a transform set may refer to a group including a transform kernel, and a transform kernel may refer to a transform core that is used when a transform from a spatial domain to a frequency domain is applied. In addition, a transform set may refer to a kernel cluster.

A secondary transform may refer to a transform that is performed based on the correlation of primary transform coefficients generated by the primary transform, after a primary transform from a spatial domain to a frequency domain is performed. Here, the primary transform and the main transform may have the same meaning. By performing the secondary transform, higher compression efficiency may be achieved than when only the primary transform is performed.

The primary transform and the secondary transform may be performed as a separable transform or a non-separable transform. Here, the separable transform may refer to a case in which a transform in a horizontal direction is performed and then a transform in a vertical direction is performed. In addition, the non-separable transform may refer to a case in which a transform is performed at once using a non-separable transform kernel in a matrix form rather than in the horizontal direction and the vertical direction.

In a non-separable transform, a basis vector is used. A basis vector is a vector having a size corresponding to a total number of pixels of a two-dimensional space, in which a transform is performed, and is used to identify an overall characteristic and a similarity of a pixel in the two-dimensional space in which the transform is performed. Accordingly, the complexity of the non-separable transform is higher than that of the separable transform, but high encoding efficiency may be achieved.

In a secondary transform like low frequency non-separable transform (LFNST), non-separable kernels with various sizes may be used in consideration of coding efficiency enhancement and transform complexity for specific input block sizes.

In non-separable primary transform (NSPT) that is a primary transform, similar to LFNST, non-separable primary transform kernels with various sizes may be used in consideration of coding efficiency enhancement and transform complexity for specific input block sizes.

A transform kernel selected from a plurality of transform kernels may be used for a transform of a current block. This may be referred to as multiple transform selection (MTS).

In addition, a transform set may be selected from among a plurality of transform sets, and a transform of a current block may be performed by using at least one of a plurality of transform kernels included in the selected transform set. Here, selecting a transform set from among a plurality of transform sets may be referred to as multiple transform set selection (MTSS).

Conventional NSPT and LFNST could both be used only for an intra prediction block. Hereinafter, the present specification provides a method for determining a transform set and a transform kernel for inter prediction block. In addition, the present specification provides a method for determining a transform set and a transform kernel for a block on which special intra prediction is performed such as intra template matching prediction (IntraTMP), intra block copy (IBC), spatial geometric partition mode (SGPM), and spatial combined intra-intra prediction (SCIIP).

Hereinafter, a method for determining a transform set according to the present invention is described. A method for determining a transform set refers to a method for determining a transform set for transform/inverse transform of a current block from among a plurality of transform sets.

As an example, a method for determining a transform set refers to a method for determining a transform set for transform/inverse transform of a current block from among three transform sets. Here, a first transform set (hereinafter, a first transform set) and a second transform set (hereinafter, a second transform set) may be transform sets used for transform/inverse transform of a block on which intra prediction is performed, and a third transform set (hereinafter, a third transform set) may be a transform set used for transform/inverse transform of a block on which inter prediction is performed. In addition, a transform set for transform/inverse transform of a current block may be determined from among the above-described three transform sets.

Meanwhile, the first transform set may be a transform set used for transform/inverse transform of a conventional intra prediction block. Here, the conventional intra prediction block may refer to a prediction block in which an intra prediction mode is any one of a non-directional prediction mode such as a DC mode and a Planar mode and a directional prediction mode (for example, 65 directions).

Meanwhile, the second transform set may be a transform set used for transform/inverse transform of a block on which intra prediction is performed by using any one of a spatial geometric prediction mode (SGPM) technique, a template-

based intra mode derivation (TIMD) technique, a decoder side intra mode derivation (DIMD) technique, an extrapolation filter-based intra prediction (EIP) technique, and a matrix-based intra prediction (MIP) technique. Here, SGPM may refer to a technique in which a current block is spatially partitioned into at least two or more regions and intra prediction is performed, and TIMD may refer to a technique in which a prediction mode of a current block is derived by using a reference region of a template. In addition, DIMD may refer to a technique in which a prediction mode of a current block is derived at a decoder without parsing, EIP may refer to a technique in which prediction is performed by using an extrapolation filter, and MIP may refer to a technique in which prediction is performed based on a matrix.

Meanwhile, the above-described transform set may be a transform set of a non-separable primary transform (NSPT). In addition, the above-described transform set may be a transform set of a non-separable secondary transform (LFNST).

Meanwhile, the transform set determination method according to the present invention may be applied even when the prediction mode of the current block is not intra prediction mode.

Meanwhile, according to the above-described embodiment, the number of transform sets is three, but this is merely one example, and the number of transform sets may be S. Here, S is an integer of 2 or more.

Meanwhile, according to the above-described embodiment, the first transform set and the second transform set are transform sets used for inverse transform of a current block on which intra prediction is performed, and the third transform set is a transform set used for inverse transform of a current block on which inter prediction is performed, but this is merely one example, and an arbitrary transform set may correspond to inverse transform of the current block on which prediction is performed in an arbitrary manner.

According to an embodiment of the present invention, a transform set may be determined based on a prediction mode of a current block. As an example, when the prediction mode of the current block is an inter prediction mode, the transform set of the current block may be determined as the third transform set from among the above-described first transform set, second transform set, and third transform set. As described above, in the present invention, a non-separable transform may be performed on a block other than an intra prediction block.

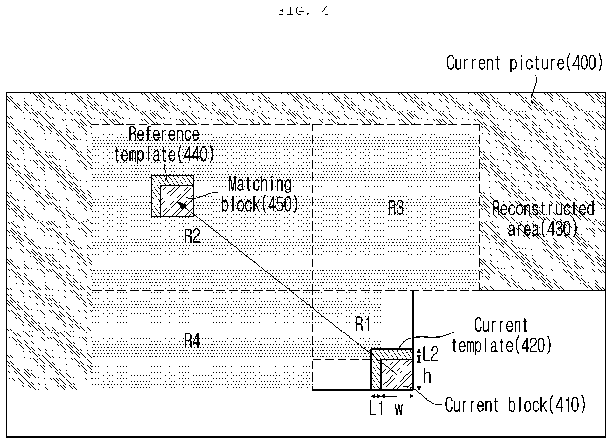

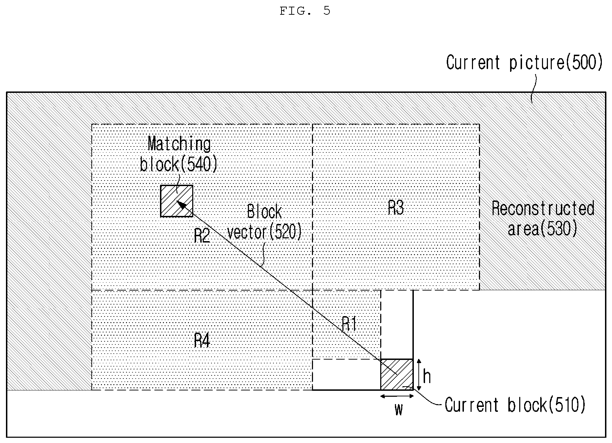

FIGS. 4 and 5 are views for describing that a transform set is determined based on a prediction mode of a current block.

FIG. 4 is a view for describing a method of determining a transform set when a prediction mode of a current block is an intra template matching mode according to an embodiment of the present invention.

The IntraTMP method means a method for searching for an optimal prediction block in a reconstructed area of a current picture by using template matching and for generating a prediction block of a current block by copying the optimal prediction block. When the prediction mode of the current block is an intra template matching mode, a prediction block of the current block is generated based on an intra template matching prediction method.

Referring to FIG. 4, a neighboring L-shaped region (i.e., left, top, and top-left regions) of a current block 410 may be defined as a current template 420. In addition, a most similar reference template 440 to the current template 420 may be searched within predefined search ranges R1, R2, R3 and R4 of a reconstructed area 430 of a current picture 400. In addition, a prediction block of the current block 410 may be derived based on a matching block 450 corresponding to the determined reference template 440.

The predefined search ranges R1, R2, R3 and R4 in FIG. 4 may be defined as a current coding tree unit (CTU) including the current block, a top-left CTU, a top CTU, and a left CTU, respectively. Here, the top-left CTU may refer to a CTU positioned at the top-left of a current CTU within a preset region from the current CTU, the top CTU may refer to a CTU positioned at the top of the current CTU within the preset region, and the left CTU may refer to a CTU positioned at the left of the current CTU within the preset region. The preset region may be any one region among a current tile including the current block, a current slice, and a current picture.

In addition, the predefined search ranges may be searched for a reference template based on a predefined search order. As an example, a reference template may be searched in a zigzag order of R1, R4, R3, and R2.

Meanwhile, information on a search range and the size and shape of a current template may be determined in an encoder and transmitted to a decoder. In addition, a search range and the size and shape of a current template may be set to predetermined values in an encoder/decoder.

As an example, instead of a L-shaped template using both a left reconstructed area and a top reconstructed area, either the top reconstructed area or the left reconstructed area alone may be used as a template.

As an example, the size of a current template may be determined by (w x L2) + (L1 x h) + (L1 x L2) as in FIG. 4. Here, w and h may represent the width and height of the current block, and the values of L1 and L2 may be determined as arbitrary positive integers.

As for template shapes, the example of FIG. 4 searches for a most similar reference template to a current template by using one L-shaped template, but this is merely one example, and it is possible to search for a most similar reference template to a current template by using an L-shared template, a template using only an upper area, a template using only a left area, or a template having an arbitrary shape.

Meanwhile, when the prediction mode of the current block is an intra template matching mode, transform/inverse

transform may be performed in the same method as a transform/inverse transform method of intra prediction block. That is, a transform set of an intra block may be used even when the prediction mode of the current block is the intra template matching mode. As an example, when the prediction mode of the current block is the intra template matching mode, non-separable transform/inverse transform may be performed by NSPT and LFNST. As another example, when the prediction mode of the current block is the intra template matching mode, the transform set may be determined as the above-described first transform set.

Alternatively, in the case of a prediction block in the intra template matching mode, due to high prediction accuracy, a characteristic of a residual and a characteristic of a primary transform coefficient generated by a primary transform may be similar to those of a prediction block in an inter prediction mode. Accordingly, a transform set of an inter block may be used for a block in the intra template matching mode. As an example, when the prediction mode of the current block is the intra template matching mode, the transform set of the current block may be determined as the above-described third transform set.

Alternatively, when the prediction mode of the current block is the intra template matching mode, the transform set may be determined as any one of a transform set of an intra block (hereinafter, an intra transform set) and a transform set of an inter block (hereinafter, an inter transform set). Specifically, the transform set of the current block may be determined as a transform set having a smaller cost value between the intra transform set and the inter transform set.

For example, a rate-distortion cost (RD cost) may be calculated for each transform set at the encoder, and a transform set having a small distortion may be selected as an optimal transform set.

In addition, in addition to information generally signaled in a transform, information on the optimal transform set may be signaled to the decoder. Here, the information on the optimal transform set may be any one of a flag regarding whether or not an intra transform set is used and a flag regarding whether or not an inter transform set is used.

In addition, a transform set of the current block may be determined at the decoder based on the information on the optimal transform set. For example, when the information on the optimal transform set is a flag regarding whether or not the intra transform set is used, and the information indicates that the intra transform set is used, the transform set of the current block may be determined as the intra transform set. On the other hand, when the information does not indicate that the intra transform set is used, the transform set of the current block may be determined as the inter transform set. Similarly, when the information on the optimal transform set is a flag regarding whether or not the inter transform set is used, and the information indicates that the inter transform set is used, the transform set of the current block may be determined as the inter transform set, but when the information does not indicate that the inter transform set is used, the transform set of the current block may be determined as the intra transform set.

Meanwhile, the information on the optimal transform set may be a one-bit flag and may be signaled at any one level of a block level, a slice level, a picture level, and a sequence level.

FIG. 5 is a view for describing a method of determining a transform set when a prediction mode of a current block is an intra block copy mode according to an embodiment of the present invention.

An intra block copy method is a method for searching for an optimal prediction block in a reconstructed area of a current picture by using a block vector and then generating a prediction block of a current block by copying the optimal prediction block. When the prediction mode of the current block is an intra block copy mode, a prediction block of the current block is generated based on the intra block copy method.

Referring to FIG. 5, based on a block vector 520 of a current block 510, a matching block 540 may be derived within predefined search ranges R1, R2, R3 and R4 of a reconstructed area 530 of a current picture 500. In addition, a prediction block of the current block 510 may be derived based on the matching block 540. Meanwhile, the block vector 520 is a vector indicating a matching block 540 of the current block 510 in intra block copy.

The predefined search ranges R1, R2, R3 and R4 in FIG. 5 may be defined as a current coding tree unit (CTU) including the current block, a top-left CTU, a top CTU, and a left CTU, respectively. Here, the top-left CTU may refer to a CTU positioned at the top-left of a current CTU within a preset region from the current CTU, the top CTU may refer to a CTU positioned at the top of the current CTU within the preset region, and the left CTU may refer to a CTU positioned at the left of the current CTU within the preset region. The preset region may be any one region among a current tile including the current block, a current slice, and a current picture.

In addition, the predefined search ranges may be searched for the matching block based on a predefined search order. As an example, the matching block may be searched in a zigzag order of R1, R4, R3, and R2.

Meanwhile, information on a search range may be determined in an encoder and be transmitted to a decoder. In addition, the search range may be set to a predetermined value in an encoder/decoder.

Meanwhile, when the prediction mode of the current block is an intra block copy mode, transform/inverse transform may be performed in the same method as a transform/inverse transform method of intra prediction block. That is, a transform set of an intra block may be used even when the prediction mode of the current block is the intra block copy mode. As an example, when the prediction mode of the current block is the intra block copy mode, non-separable transform/inverse transform may be performed by NSPT and LFNST. As another example, when the prediction mode of the current block is the intra block copy mode, the transform set may be determined as the above-described first transform

set.

Alternatively, in the case of a prediction block in the intra block copy mode, due to high prediction accuracy, a characteristic of a residual and a characteristic of a primary transform coefficient generated by a primary transform may be similar to those of a prediction block in an inter prediction mode. Accordingly, a transform set of an inter block may be used for a block in the intra block copy mode. As an example, when the prediction mode of the current block is the intra block copy mode, the transform set of the current block may be determined as the above-described third transform set.

Alternatively, when the prediction mode of the current block is the intra block copy mode, the transform set may be determined as any one of a transform set of an intra block (hereinafter, an intra transform set) and a transform set of an inter block (hereinafter, an inter transform set). Specifically, the transform set of the current block may be determined as a transform set having a smaller cost value between the intra transform set and the inter transform set.

For example, a cost value may be calculated at the encoder. A rate-distortion cost (RD cost) may be calculated for each transform set at the encoder, and a transform set having a small distortion may be selected as an optimal transform set.

In addition, in addition to information generally signaled in a transform, information on the optimal transform set may be signaled to the decoder. Here, the information on the optimal transform set may be any one of a flag regarding whether or not an intra transform set is used and a flag regarding whether or not an inter transform set is used.

In addition, a transform set of the current block may be determined at the decoder based on the information on the optimal transform set. For example, when the information on the optimal transform set is a flag regarding whether or not the intra transform set is used, and the information indicates that the intra transform set is used, the transform set of the current block may be determined as the intra transform set. On the other hand, when the information does not indicate that the intra transform set is used, the transform set of the current block may be determined as the inter transform set. Similarly, when the information on the optimal transform set is a flag regarding whether or not the inter transform set is used, and the information indicates that the inter transform set is used, the transform set of the current block may be determined as the inter transform set, but when the information does not indicate that the inter transform set is used, the transform set of the current block may be determined as the intra transform set.

Meanwhile, the information on the optimal transform set may be a one-bit flag and may be signaled at any one level of a block level, a slice level, a picture level, and a sequence level.

Meanwhile, in the above-described embodiment, the transform set of the current block may be determined based on a prediction mode of the current block without separate signaling. For example, when the prediction mode of the current block is any one of an inter prediction mode, an intra template matching mode, and an intra block copy mode, the transform set of the current block may be determined as the above-described third transform set at the decoder.

According to an embodiment of the present invention, the transform set of the current block may be determined in a manner other than being determined based on the prediction mode of the current block.

As an example, the transform set may be determined based on directionality information of pixels included in the entire region or a partial region of a prediction block of the current block. Here, the directionality information may refer to information obtained by calculating a gradient of the pixels.

As another example, the transform set may be determined based on directionality information of integer pixels included in the entire region or a partial region of a prediction block of the current block, and directionality information of sub-pixels obtained by applying an interpolation filter to the region.

As yet another example, the transform set may be determined based on directionality information of pixels included in the entire region or a partial region of any one of a template neighboring the current block or a template corresponding to the current block.

As yet another example, the transform set may be determined based on directionality information of integer pixels included in the entire region or a partial region of any one of a template neighboring the current block or a template corresponding to the current block, and directionality information of sub-pixels obtained by applying an interpolation filter to the region.

Meanwhile, the above-described directionality information may refer to information obtained by calculating a gradient of the pixels. Specifically, the directionality information may refer to information obtained by accumulating or processing gradient information calculated by applying a filter to the pixels. The filter applied to the pixels may be any one of a Sobel filter, a Roberts cross filter, a Prewitt filter, a Scharr filter, and a Laplacian filter.

Meanwhile, the above-described template neighboring the current block may refer to an arbitrary region neighboring the current block, and the template corresponding to the current block may refer to an arbitrary region having the same size as the template neighboring the current block.

As yet another example, when the prediction mode of the current block is an inter prediction mode, the transform set may be determined based on the magnitude of at least one of a motion vector in an x direction and a motion vector in a y direction of the current block. Alternatively, when the prediction mode of the current block is an inter prediction mode, the transform set may be determined based on a value obtained by processing the magnitude of at least one of a motion vector in an x direction and a motion vector in a y direction of the current block.

As yet another example, when the prediction mode of the current block is inter prediction mode, the transform set may be determined based on the precision of at least one of a motion vector in an x direction and a motion vector in a y direction of the current block. Specifically, the transform set may be determined based on whether the precision of the motion vector is an integer-pel precision or a fractional-pel precision.

As yet another example, the transform set may be determined based on at least one of a horizontal length and a vertical length of the current block.

As yet another example, the transform set may be determined based on the number of pixels included in the current block.

As yet another example, the transform set may be determined based on information regarding partitioning of the current block.

As yet another example, the transform set may be determined based on an explicitly signaled syntax element. Specifically, when a transform set is determined at the encoder, a syntax for the determined transform set may be signaled to the decoder. A transform set for inverse transform may be determined at the decoder based on the syntax element.

As yet another example, the transform set may be determined based on values of neighboring pixels of the current block. Here, the neighboring pixels may refer to all pixels or some pixels included in a block adjacent to the current block or may refer to all pixels or some pixels included in a block corresponding to the current block.

As yet another example, the transform set may be determined based on a quantization coefficient.

Meanwhile, a transform set for the transform of the current block may be determined from among S transform sets by using the above-described methods. Here, S is an integer of 2 or more.

Meanwhile, the above-described method for determining a transform set may be performed even when the prediction mode of a current block is an inter prediction mode.

According to an embodiment of the present invention, a transform set of the current block may be determined by deriving an intra prediction mode for transform set determination. Specifically, an intra prediction mode for transform set determination may be derived based on directionality information of pixels included in a prediction block of the current block, and the transform set may be determined by using the intra prediction mode. Meanwhile, directionality information may refer to information obtained by calculating a gradient of pixels.

First, a gradient of pixels included in a prediction block of the current block may be calculated. Here, the gradient may be calculated by applying at least one of a Sobel filter, a Roberts cross filter, a Prewitt filter, a Scharr filter, and a Laplacian filter to pixels included in a prediction block.

Meanwhile, only a gradient of some of the pixels included in a prediction block of the current block may be calculated. For example, when a sub-block transform (SBT) is applied to the current block and the current block is partitioned, and transform is performed on only one of the blocks, only a gradient of pixels included in a region of a prediction block corresponding to the block on which the transform is performed may be calculated. As another example, after down-sampling is performed on pixels included in a prediction block of the current block, only a gradient of the down-sampled pixels may be calculated.

In addition, a histogram of gradient (HoG) may be generated based on the calculated gradient.

In addition, an intra prediction mode for transform set determination may be derived by using the HoG.

As an example, the intra prediction mode for transform set determination may be an intra prediction mode corresponding to directionality with the highest accumulation in the HoG.

As another example, the intra prediction mode for transform set determination may be a prediction mode having a smallest assigned prediction mode number among N prediction modes corresponding to directionality with the highest accumulation in the HoG. Here, N is an arbitrary positive integer.

As yet another example, N intra prediction modes corresponding to directionality with the highest accumulation in the HoG may be derived, and an index for transform set determination may be derived by using the N intra prediction modes. In addition, the transform set of the current block may be determined based on the index. Here, N is an arbitrary positive integer.

As yet another example, when directionality accumulated in the HoG is lower than a predetermined threshold value, an intra prediction mode for transform set determination may be derived as a predetermined intra prediction mode. Here, the predetermined intra prediction mode may be any one of a DC mode, a vertical DC mode, a horizontal DC mode, a Planar mode, a vertical Planar mode, and a horizontal Planar mode.

Meanwhile, the predetermined threshold value may be defined at the encoder and the decoder respectively. Alternatively, the predetermined threshold value may be defined at the encoder and may be signaled to the decoder. Alternatively, the predetermined threshold value may be defined based on an agreement between the encoder/decoder.

In addition, the transform set may be determined based on a derived intra prediction mode. Specifically, the transform set is determined as a transform set mapped to the derived intra prediction mode from among a plurality of transform sets. Here, the mapping between the intra prediction mode and the transform set may be performed in the same method as a transform of an intra block. For example, the mapping may be performed in the same method as LFNST and NSPT.

Table 1 is a table showing an example in which 95 intra prediction modes are mapped to transform sets in LFNST and NSPT.

[Table 1]

| intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| transform set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| transform set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| transform set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

Meanwhile, in the above-described embodiment, when directionality in an HoG is accumulated, a method of accumulating in one bin or a method of accumulating in a plurality of bins may be used. Here, the method of accumulating in a plurality of bins may refer to a method of accumulating in one bin corresponding to the directionality of a gradient calculated through a filter and M bins around the one bin. M is an integer of 1 or more.

Meanwhile, in the above-described embodiment, the directionality information is obtained by calculating a gradient of pixels included in a prediction block of the current block, but this is one example, and the directionality information may be obtained by calculating a gradient of integer pixels in the entire region or a partial region of a prediction block of the current block, and sub-pixels obtained by applying an interpolation filter to the region.

Meanwhile, in the above-described embodiment, the directionality information is obtained by calculating a gradient of pixels included in a prediction block of the current block, but this is one example, and the directionality information may be obtained by calculating a gradient of pixels included in any one of a template neighboring the current block and a template corresponding to the current block. Alternatively, the directionality information may be obtained by calculating a gradient of integer pixels in the entire region or a partial region of any one of a template neighboring the current block and a template corresponding to the current block, and sub-pixels obtained by applying an interpolation filter to the region. Here, the template neighboring the current block may refer to an arbitrary region neighboring the current block, and the template corresponding to the current block may refer to an arbitrary region having the same size as the template neighboring the current block.

Hereinafter, a method for determining a transform kernel for transform/inverse transform of a current block from among transform kernels included in a transform set according to the present invention will be described.

When a transform set is determined, the transform/inverse transform of the current block may be performed based on the transform set. Specifically, a transform kernel for transform/inverse transform of the current block may be determined from among K transform kernels included in the transform set, and the transform/inverse transform of the current block may be performed based on the transform kernel. Here, K is an integer of 2 or more.

Meanwhile, when one transform kernel is included in the transform set, the transform kernel of the current block may be determined as the one transform kernel.

According to an embodiment of the present invention, when a prediction mode of the current block is an inter prediction mode, the transform kernel of the current block may be determined as one predefined special transform kernel at the encoder/decoder. In this case, an encoder/decoder may check whether the prediction mode of the current block is an inter prediction mode and may perform the transform/inverse transform based on the predefined transform kernel when the prediction mode is the inter prediction mode.

According to an embodiment of the present invention, the transform kernel may be determined based on directionality of pixels included in a prediction block of the current block. Specifically, an intra prediction mode for transform kernel determination may be derived based on directionality information of pixels included in a prediction block of the current block, and the transform kernel may be determined by using the intra prediction mode. Meanwhile, directionality information may refer to information obtained by calculating a gradient of pixels.

First, a gradient of pixels included in a prediction block of the current block may be calculated. Here, the gradient may be calculated by applying at least one of a Sobel filter, a Roberts cross filter, a Prewitt filter, a Scharr filter, and a Laplacian filter to pixels included in a prediction block.

Meanwhile, only a gradient of some of the pixels included in a prediction block of the current block may be calculated. For example, when a sub-block transform (SBT) is applied to the current block and the current block is partitioned and then transform is performed on only one of the blocks, only a gradient of pixels included in a region of a prediction block corresponding to the block on which the transform is performed may be calculated. As another example, after down-sampling is performed on pixels included in a prediction block of the current block, only a gradient of the down-sampled pixels may be calculated.

In addition, a histogram of gradient (HoG) may be generated based on the calculated gradient.

In addition, an intra prediction mode for transform kernel determination may be derived by using the HoG. Here,

the intra prediction mode for transform kernel determination may have the same meaning as the transform kernel determination intra prediction mode.

According to an embodiment of the present invention, the transform kernel of the current block may be determined as follows.

As an example, the transform kernel may be determined based on directionality information of pixels included in the entire region or a partial region of a prediction block of the current block. Here, the directionality information may refer to information obtained by calculating a gradient of the pixels.

As another example, the transform kernel may be determined based on directionality information of integer pixels included in the entire region or a partial region of a prediction block of the current block, and directionality information of sub-pixels obtained by applying an interpolation filter to the region.

As yet another example, the transform kernel may be determined based on directionality information of pixels included in the entire region or a partial region of any one of a template neighboring the current block or a template corresponding to the current block.

As yet another example, the transform kernel may be determined based on directionality information of integer pixels included in the entire region or a partial region of any one of a template neighboring the current block or a template corresponding to the current block, and directionality information of sub-pixels obtained by applying an interpolation filter to the region.

Meanwhile, the above-described directionality information may refer to information obtained by calculating a gradient of the pixels. Specifically, the directionality information may refer to information obtained by accumulating or processing gradient information calculated by applying a filter to the pixels. The filter applied to the pixels may be any one of a Sobel filter, a Roberts cross filter, a Prewitt filter, a Scharr filter, and a Laplacian filter.

Meanwhile, the above-described template neighboring the current block may refer to an arbitrary region neighboring the current block, and the template corresponding to the current block may refer to an arbitrary region having the same size as the template neighboring the current block.

As yet another example, when the prediction mode of the current block is an inter prediction mode, the transform kernel may be determined based on the magnitude of at least one of a motion vector in an x direction and a motion vector in a y direction of the current block. Alternatively, when the prediction mode of the current block is an inter prediction mode, the transform kernel may be determined based on a value obtained by processing the magnitude of at least one of a motion vector in an x direction and a motion vector in a y direction of the current block.

As yet another example, when the prediction mode of the current block is inter prediction mode, the transform kernel may be determined based on the precision of at least one of a motion vector in an x direction and a motion vector in a y direction of the current block. Specifically, the transform kernel may be determined based on whether the precision of the motion vector is an integer-pel precision or a fractional-pel precision.

As yet another example, the transform kernel may be determined based on at least one of a horizontal length and a vertical length of the current block.

As yet another example, the transform kernel may be determined based on the number of pixels included in the current block.

As yet another example, the transform kernel may be determined based on information regarding partitioning of the current block.

As yet another example, the transform kernel may be determined based on values of neighboring pixels of the current block. Here, the neighboring pixels may refer to all pixels or some pixels included in a block adjacent to the current block or may refer to all pixels or some pixels included in a block corresponding to the current block.

As yet another example, the transform kernel may be determined based on a quantization coefficient.

Meanwhile, a transform kernel for the transform of the current block may be determined from among K transform kernels by using the above-described methods. Here, K is an integer of 2 or more.

Meanwhile, the above-described method for determining a transform kernel may be performed even when the prediction mode of a current block is an inter prediction mode.

Meanwhile, the above-described transform kernel determination method may be performed at the encoder/decoder. After a transform is performed based on the transform kernel determined at the encoder, signaling for the transform kernel is not necessary. At the decoder, inverse transform is also performed based on the determined transform kernel.

Alternatively, the transform kernel may be determined based on an explicitly signaled syntax element. Specifically, when a transform kernel is determined at the encoder, a syntax for the determined transform set may be signaled to the decoder. A transform kernel for inverse transform may be determined at the decoder based on the syntax element.

Meanwhile, the above-described method for determining a transform kernel may be performed even when the prediction mode of a current block is an inter prediction mode.

According to an embodiment of the present invention, the transform kernel may be determined as a transform kernel having the smallest cost value from among K transform kernels included in the transform set. Here, K is an integer of 2 or more.

Specifically, a RD cost may be calculated for each transform kernel at the encoder, and a kernel having the smallest distortion may be selected as an optimal transform kernel.

In addition, information on the optimal transform kernel may be signaled to the decoder. Here, the information on the optimal transform kernel may be a flag when K is 2 and may be a kernel index when K is 3 or more. At the decoder, a transform kernel may be determined based on the information, and an inverse transform may be performed based on the determined transform kernel.

Meanwhile, according to the above-described embodiments, a transform kernel is determined after a transform set is determined, but this is one example, and when a separate transform set does not exist, a transform kernel of a current block may be determined without determining a transform set. In this case, a transform kernel determination method may be performed in the same manner as the transform kernel determination method according to the above-described embodiments.

Meanwhile, according to the above-described embodiments, a transform kernel is determined after a transform set is determined, but the determination of a transform set and that of a transform kernel may be performed simultaneously.

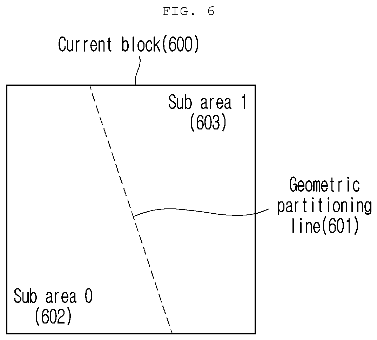

FIG. 6 is a view for describing a method of determining a transform set and a transform kernel in a spatial geometric partitioning mode (SGPM) according to an embodiment of the present invention. Here, the SGPM may refer to a mode in which a block is partitioned into two regions by a straight partitioning boundary and intra prediction is performed. Specifically, according to the SGPM, each of the partitioned regions is independently intra predicted to generate an intra prediction block for each region, and an intra prediction block of a current block may be generated by calculating a weighted sum of the intra prediction blocks.

Referring to FIG. 6, when a prediction mode of a current block 600 is the SGPM, the current block is separated into two regions based on a geometric partitioning line 601. Here, each of the separated regions may be referred to as sub-partition 0 (602) and sub-partition 1 (603). Prediction may be independently performed on each sub-partition based on each intra prediction mode. Specifically, a prediction block is generated based on an intra prediction mode of sub-partition 0, and a prediction block may be generated based on an intra prediction mode of sub-partition 1. In addition, each prediction block may be weighted-summed to generate a final intra prediction block of the current block.

According to an embodiment of the present invention, when a prediction mode of a current block is the SGPM, a transform set and a kernel for a transform of the current block may be determined based on an intra prediction mode of each sub-partition.

For example, at least one of a transform set and a transform kernel of the current block may be determined by using an intra prediction mode having a smaller assigned prediction mode number between an intra prediction mode of sub-partition 0 and an intra prediction mode of sub-partition 1.

As another example, at least one of the transform set and the transform kernel of the current block may be determined by using an intra prediction mode having a smaller cost value between the intra prediction mode of sub-partition 0 and the intra prediction mode of sub-partition 1. Specifically, a RD cost may be calculated for a result of performing each intra prediction mode, and an intra prediction mode having a small distortion may be used.

As yet another example, prediction may be performed on any one of a template neighboring the current block and a template corresponding to the current block by using the intra prediction mode of sub-partition 0 and the intra prediction mode of sub-partition 1, and a cost value may be calculated. Specifically, a RD cost may be calculated for a result of performing each intra prediction mode. In addition, at least one of the transform set and the transform kernel of the current block may be determined by using an intra prediction mode having a small distortion. Here, the neighboring template may refer to an arbitrary region neighboring the current block, and the template corresponding to the current block may refer to an arbitrary region having the same size as the template neighboring the current block.

Meanwhile, in the above-described example, a method of determining a transform set by using an intra prediction mode may be performed in the same manner as mapping in a transform of an intra block. For example, the mapping may be performed in the same method as LFNST and NSPT.

Meanwhile, in the above-described example, when the transform kernel is determined by using an intra prediction mode, the transform kernel may be mapped to the intra prediction mode through an arbitrary method. Alternatively, an arbitrary lookup table for a transform kernel mapped to the intra prediction mode may be defined.

Meanwhile, in the SGPM, a sub-partition and a sub-block may have the same meaning.

According to an embodiment of the present invention, even when a prediction mode of a current block is the SGPM, any one of the above-described transform set determination method and transform kernel determination method may be performed instead of the transform set and the transform kernel being determined based on the intra prediction mode of each sub-partition.

As an example, at least one of a transform set and a transform kernel may be determined based on directionality information of pixels included in an entire region or a partial region of any one of a template neighboring a current block or a template corresponding to the current block.

As another example, in the case of a prediction block in the SGPM, due to high prediction accuracy, a characteristic of a residual and a characteristic of a primary transform coefficient generated by a primary transform

may be similar to those of a prediction block in an inter prediction mode. Accordingly, a transform set for transform/inverse transform of an inter block may be used for a block in the SGPM. As an example, when the prediction mode of the current block is a spatial geometric mode, the transform set of the current block may be determined as the above-described third transform set.

As yet another example, when the prediction mode of the current block is the SGPM, the transform/inverse transform may be performed in the same manner as a transform/inverse transform method of an intra block. That is, a transform set of an intra block may be used for a block in the SGPM. When the prediction mode of the current block is the SGPM, the transform set of the current block may be determined as the above-described second transform set. Alternatively, the transform set may be determined as the above-described first transform set.

As yet another example, when the prediction mode of the current block is the geometric partitioning mode, the transform set of the current block may be determined as any one of a transform set of an intra block (an intra transform set) and a transform set of an inter block (an inter transform set). Specifically, the transform set of the current block may be determined as a transform set having a smaller cost value between the intra transform set and the inter transform set. In this case, in addition to information generally signaled in a transform, information on an optimal transform set is also signaled to a decoder.

Hereinafter, a method for determining a transform set and a transform kernel in a spatial combined intra-intra prediction (SCIIP) mode according to an embodiment of the present invention will be described. Here, the SCIIP may refer to a mode in which intra prediction is performed based on two different intra prediction modes.

Specifically, according to the SCIIP, two prediction blocks may be generated based on different intra prediction modes. In addition, the generated prediction blocks may be weighted-summed to generate a final intra prediction block of a current block. Here, the different intra prediction modes may be referred to as a first intra prediction mode and a second intra prediction mode, respectively.

According to an embodiment, when a prediction mode of a current block is the SCIIP, a transform set and a kernel for transform of the current block may be determined based on the first intra prediction mode and the second intra prediction mode.

For example, at least one of a transform set and a transform kernel of the current block may be determined by using an intra prediction mode having a smaller assigned prediction mode number between the first intra prediction mode and the second intra prediction mode.

As another example, at least one of the transform set and the transform kernel of the current block may be determined by using an intra prediction mode having a smaller cost value between the first intra prediction mode and the second intra prediction mode.

Meanwhile, a method of determining a transform set by using an intra prediction mode may be performed in the same manner as mapping in a transform of an intra block. For example, the method may be performed in the same manner as mapping between an intra prediction mode and a transform set in LFNST and NSPT.

Meanwhile, an intra prediction mode that is used to determine transform kernel based on the first intra prediction mode and the second intra prediction mode may be mapped to a transform kernel through an arbitrary method. Alternatively, an arbitrary lookup table may be defined for the transform kernel mapped to the intra prediction mode.

According to an embodiment of the present invention, even when a prediction mode of a current block is the SCIIP, any one of the above-described transform set determination method and transform kernel determination method may be performed instead of the transform set and the transform kernel being determined based on the intra prediction mode of each sub-partition.

As an example, at least one of a transform set and a transform kernel may be determined based on directionality information of pixels included in an entire region or a partial region of any one of a template neighboring a current block or a template corresponding to the current block.

As another example, in the case of a prediction block in the SCIIP, due to high prediction accuracy, a characteristic of a residual and a characteristic of a primary transform coefficient generated by a primary transform may be similar to those of a prediction block in an inter prediction mode. Accordingly, a transform set of an inter block may be used for a block in the SCIIP. As an example, when the prediction mode of the current block is the SCIIP, the transform set of the current block may be determined as the above-described third transform set.

As yet another example, when the prediction mode of the current block is the SCIIP, a transform/inverse transform may be performed in the same manner as a transform/inverse transform method of an intra block. That is, a transform set of an intra block may be used for a block in the SCIIP. When the prediction mode of the current block is the SCIIP, the transform set of the current block may be determined as the above-described second transform set. Alternatively, the transform set may be determined as the above-described first transform set.

As yet another example, when the prediction mode of the current block is the SCIIP, the transform set of the current block may be determined as any one of a transform set of an intra block (hereinafter, an intra transform set) and a transform set for transform/inverse transform of an inter block (hereinafter, an inter transform set). Specifically, the transform set of the current block may be determined as a transform set having a smaller cost value between the intra

transform set and the inter transform set. In this case, in addition to information generally signaled in a transform, information on an optimal transform set is also signaled to a decoder.

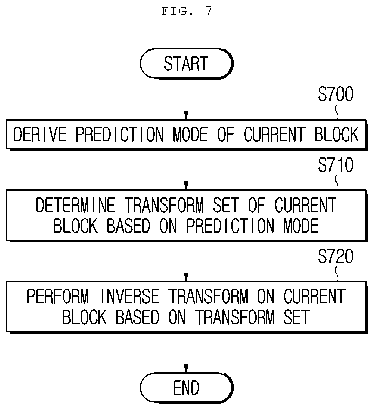

FIG. 7 is a flowchart for describing a method of determining a transform set according to an embodiment of the present invention. The method for determining a transform set in FIG. 7 may be performed by an image decoding apparatus.

The image decoding apparatus may derive a prediction mode of a current block (S700).

In addition, the image decoding apparatus may determine a transform set of the current block based on the prediction mode of the current block (S710).

Meanwhile, the transform set may be determined as any one of a first transform set for first intra prediction, a second transform set for second intra prediction, and a third transform set for inter prediction.

Meanwhile, when the prediction mode is an intra template matching mode, the transform set may be determined as the third transform set.

Meanwhile, the transform set may be a transform set of a non-separable primary transform.

Meanwhile, when the prediction mode is an intra block copy mode, the transform set may be determined as the third transform set.

Meanwhile, the first intra prediction may include a non-directional intra prediction and a directional intra prediction, and the second intra prediction may include SGPM intra prediction.

Meanwhile, when the current block is partitioned into a first sub-block and a second sub-block according to a partitioning boundary, the transform set may be determined as the second transform set.

In addition, the image decoding apparatus may perform an inverse transform on the current block based on the transform set (S720).

Meanwhile, the performing of the inverse transform may include determining a transform kernel of the current block from among transform kernels included in the transform set, and performing an inverse transform based on the transform kernel.

Meanwhile, the determining of the transform kernel may include deriving a transform kernel determination intra prediction mode, and determining the transform kernel based on the transform kernel determination intra prediction mode.

Meanwhile, the transform kernel determination intra prediction mode may be determined by using directionality information of some pixels included in a prediction block of the current block.

Meanwhile, the transform kernel may be a transform kernel having the smallest distortion among transform kernels included in the transform set.

Meanwhile, when the prediction mode of the current block is any one of an intra template matching mode and an intra block copy mode, obtaining intra prediction mode utilization information indicating whether an intra prediction mode is used to determine the transform kernel is further included, and when the intra prediction mode utilization information indicates that the intra prediction mode is used, the determining of the transform kernel may include deriving a transform kernel determination intra prediction mode and determining the transform kernel based on the transform kernel determination intra prediction mode.

Meanwhile, when the current block is partitioned into a first sub-block and a second sub-block according to a partitioning boundary, the transform kernel may be determined based on a prediction mode of the first sub-block and a prediction mode of the second sub-block.

Meanwhile, when the current block is partitioned into a first sub-block and a second sub-block according to a partitioning boundary, obtaining sub-block prediction mode utilization information indicating whether the prediction mode of the first sub-block and the prediction mode of the second sub-block are used to determine the transform kernel is further included, and when the sub-block prediction mode utilization information indicates that the prediction mode of the first sub-block and the prediction mode of the second sub-block are used, the transform kernel may be determined based on the prediction mode of the first sub-block and the prediction mode of the second sub-block.

Meanwhile, when the prediction mode of the current block is the SCIIP mode, the transform kernel of the current block may be determined based on a first intra prediction mode of the SCIIP mode and a second intra prediction mode of the SCIIP mode.

Meanwhile, the steps described in FIG. 7 may be performed likewise in an image encoding method. In addition, a bitstream may be generated by an image encoding method including the steps described in FIG. 7. The bitstream may be stored in a non-transitory computer-readable recording medium and also be transmitted (or streamed).

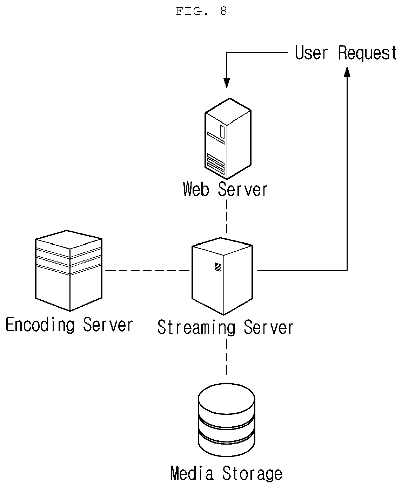

FIG. 8 exemplary illustrates a content streaming system to which an embodiment according to the present disclosure is applicable.

As illustrated in FIG. 8, a content streaming system to which an embodiment of the present disclosure is applied may largely include an encoding server, a streaming server, a web server, a media storage, a user device, and a multimedia input device.

The encoding server compresses content received from multimedia input devices such as smartphones, cameras, CCTVs, etc. into digital data to generate a bitstream and transmits it to the streaming server. As another

example, if multimedia input devices such as smartphones, cameras, CCTVs, etc. directly generate a bitstream, the encoding server may be omitted.

The bitstream may be generated by an image encoding method and/or an image encoding apparatus to which an embodiment of the present disclosure is applied, and the streaming server may temporarily store the bitstream in the process of transmitting or receiving the bitstream.

The streaming server transmits multimedia data to a user device based on a user request via a web server, and the web server may act as an intermediary that informs the user of any available services. When a user requests a desired service from the web server, the web server transmits it to the streaming server, and the streaming server may transmit multimedia data to the user. At this time, the content streaming system may include a separate control server, and in this case, the control server may control commands/responses between devices within the content streaming system.

The streaming server may receive content from media storage and/or an encoding server. For example, when receiving content from the encoding server, the content may be received in real time. In this case, in order to provide a smooth streaming service, the streaming server may store the bitstream for a certain period of time.

Examples of the user devices may include mobile phones, smartphones, laptop computers, digital broadcasting terminals, personal digital assistants (PDAs), portable multimedia players (PMPs), navigation devices, slate PCs, tablet PCs, ultrabooks, wearable devices (e.g., smartwatches, smart glasses, HMDs), digital TVs, desktop computers, digital signage, etc.

Each server in the above content streaming system may be operated as a distributed server, in which case data received from each server may be distributed and processed.

The above embodiments may be performed in the same or corresponding manner in the encoding apparatus and the decoding apparatus. In addition, an image may be encoded/decoded using at least one or a combination of at least one of the above embodiments.

The order in which the above embodiments are applied may be different in the encoding apparatus and the decoding apparatus. Alternatively, the order in which the above embodiments are applied may be the same in the encoding apparatus and the decoding apparatus.

The above embodiments may be performed for each of the luma and chroma signals. Alternatively, the above embodiments for the luma and chroma signals may be performed identically.

In the above-described embodiments, the methods are described based on the flowcharts with a series of steps or units, but the present disclosure is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present disclosure.

The embodiments may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present disclosure, or well-known to a person of ordinary skill in the computer software technology field.

A bitstream generated by the encoding method according to the above embodiment may be stored in a non-transitory computer-readable recording medium. In addition, a bitstream stored in the non-transitory computer-readable recording medium may be decoded by the decoding method according to the above embodiment.

Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high-level language code that may be implemented by a computer using an interpreter. The hardware devices may be configured to be operated by one or more software modules or vice versa to conduct the processes according to the present disclosure.

Although the present disclosure has been described in terms of specific items such as detailed elements as well as the limited embodiments and the drawings, they are only provided to help more general understanding of the invention, and the present disclosure is not limited to the above embodiments. It will be appreciated by those skilled in the art to which the present disclosure pertains that various modifications and changes may be made from the above description.

Therefore, the spirit of the present disclosure shall not be limited to the above-described embodiments, and the entire scope of the appended claims and their equivalents will fall within the scope and spirit of the invention.

## Industrial Applicability

The present disclosure may be used in an apparatus for encoding/decoding an image and a recording medium for storing a bitstream.

## Claims

1. An image decoding method comprising:

   deriving a prediction mode of a current block;
   determining a transform set of the current block based on the prediction mode; and
   performing an inverse transform on the current block based on the transform set,
   wherein the transform set is determined as any one of a first transform set for first intra prediction, a second transform set for second intra prediction, and a third transform set for inter prediction.

2. The image decoding method of claim 1, wherein when the prediction mode is an intra template matching mode, the transform set is determined as the third transform set.

3. The image decoding method of claim 1, wherein the transform set is a transform set of a non-separable primary transform.

4. The image decoding method of claim 1, wherein when the prediction mode is an intra block copy mode, the transform set is determined as the third transform set.

5. The image decoding method of claim 1, wherein the first intra prediction includes non-directional intra prediction and directional intra prediction, and
   the second intra prediction includes spatial geometric prediction mode (SGPM) intra prediction.

6. The image decoding method of claim 1, wherein the performing of the inverse transform comprises:

   determining a transform kernel of the current block from among transform kernels included in the transform set; and
   performing an inverse transform based on the transform kernel.

7. The image decoding method of claim 6,
   wherein the determining of the transform kernel comprises:

   deriving a transform kernel determination intra prediction mode; and
   determining the transform kernel based on the transform kernel determination intra prediction mode.

8. The image decoding method of claim 7, wherein the transform kernel determination intra prediction mode is derived based on directionality information of some pixels included in a prediction block of the current block.

9. The image decoding method of claim 6, wherein the transform kernel is a transform kernel having the smallest distortion among transform kernels included in the transform set.

10. The image decoding method of claim 6, further comprising, when the prediction mode of the current block is any one of an intra template matching mode and an intra block copy mode, obtaining intra prediction mode utilization information indicating whether an intra prediction mode is used to determine the transform kernel,
    wherein when the intra prediction mode utilization information indicates that the intra prediction mode is used, the determining of the transform kernel comprises:

    deriving a transform kernel determination intra prediction mode; and
    determining the transform kernel based on the transform kernel determination intra prediction mode.

11. The image decoding method of claim 1, wherein when the current block is partitioned into a first sub-block and a second sub-block according to a partitioning boundary, the transform set is determined as the second transform set.

12. The image decoding method of claim 6, wherein when the current block is partitioned into a first sub-block and a second sub-block according to a partitioning boundary, the transform kernel is determined based on a prediction mode of the first sub-block and a prediction mode of the second sub-block.

13. The image decoding method of claim 6, further comprising obtaining sub-block prediction mode utilization information

indicating whether the prediction mode of the first sub-block and the prediction mode of the second sub-block are used to determine the transform kernel, when the current block is partitioned into a first sub-block and a second sub-block according to a partitioning boundary,
wherein when the sub-block prediction mode utilization information indicates that the prediction mode of the first sub-block and the prediction mode of the second sub-block are used, the transform kernel is determined based on the prediction mode of the first sub-block and the prediction mode of the second sub-block.

**14.** The image decoding method of claim 6, wherein when the prediction mode of the current block is a spatial combined intra-intra prediction (SCIIP) mode, the transform kernel of the current block is determined based on a first intra prediction mode of the SCIIP mode and a second intra prediction mode of the SCIIP mode.

**15.** An image encoding method comprising:

determining a prediction mode of a current block;
determining a transform set of the current block based on the prediction mode; and
performing a transform on the current block based on the transform set,
wherein the transform set is determined as any one of a first transform set for first intra prediction, a second transform set for second intra prediction, and a third transform set for inter prediction.

**16.** A non-transitory computer-readable recording medium for storing a bitstream, the bitstream being generated by an image encoding method,
wherein the image encoding method comprises:

determining a prediction mode of a current block;
determining a transform set of the current block based on the prediction mode; and
performing a transform on the current block based on the transform set,
wherein the transform set is determined as any one of a first transform set for first intra prediction, a second transform set for second intra prediction, and a third transform set for inter prediction.

**17.** A method for transmitting a bitstream that is generated by an image encoding method, the method comprising transmitting the bitstream,
wherein the image encoding method comprises:

determining a prediction mode of a current block;
determining a transform set of the current block based on the prediction mode; and
performing a transform on the current block based on the transform set,
wherein the transform set is determined as any one of a first transform set for first intra prediction, a second transform set for second intra prediction, and a third transform set for inter prediction.

FIG. 1

100
INPUT IMAGE
110
IMAGE PARTITIONING UNIT
121
MOTION PREDICTION UNIT
190
REFERENCE PICTURE BUFFER
180
FILTER UNIT
122
MOTION COMPENSATION UNIT
120
INTRA PREDICTION UNIT
INTER
INTRA
115
113
+
-
117
+
+
130
TRANSFORM UNIT
140
QUANTIZATION UNIT
160
DEQUANTIZATION UNIT
170
INVERSE TRANSFORM UNIT
150
ENTROPY ENCODING UNIT
BITSTREAM

FIG. 2

200
BITSTREAM
210
ENTROPY DECODING UNIT
220
DEQUANTIZATION UNIT
230
INVERSE TRANSFORM UNIT
201
+
+
203
INTRA
INTER
240
INTRA PREDICTION UNIT
250
MOTION COMPENSATION UNIT
260
FILTER UNIT
270
REFERENCE PICTURE BUFFER
RECONSTRUCTED IMAGE

FIG. 3

10
11
VIDEO SOURCE GENERATION UNIT
12
ENCODING UNIT
13
TRANSMISSION UNIT
20
23
RENDERING UNIT
22
DECODING UNIT
21
RECEPTION UNIT

FIG. 4

Current picture(400)
Reference template(440)
Matching block(450)
R3
Reconstructed area(430)
R2
R1
R4
Current template(420)
L2
h
L1
w
Current block(410)

FIG. 5

Current picture(500)
Matching block(540)
Block vector(520)
R2
R3
Reconstructed area(530)
R1
R4
h
w
Current block(510)

FIG. 6

Current block(600)
Sub area 1
(603)
Geometric
partitioning
line(601)
Sub area 0
(602)

FIG. 7

START
S700
DERIVE PREDICTION MODE OF CURRENT BLOCK
S710
DETERMINE TRANSFORM SET OF CURRENT BLOCK BASED ON PREDICTION MODE
S720
PERFORM INVERSE TRANSFORM ON CURRENT BLOCK BASED ON TRANSFORM SET
END

FIG. 8

User Request
Web Server
Encoding Server
Streaming Server
Media Storage

## INTERNATIONAL SEARCH REPORT

International application No. **PCT/KR2024/019984**

**A. CLASSIFICATION OF SUBJECT MATTER**

**H04N 19/61**(2014.01)i; **H04N 19/147**(2014.01)i; **H04N 19/70**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/61(2014.01); H04N 19/107(2014.01); H04N 19/11(2014.01); H04N 19/12(2014.01); H04N 19/124(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 예측(predict), 모드(mode), 변환(transform), 세트(set), 커널(kernel), 인트라(intra), 인터(inter)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0110237 A (LX SEMICON CO., LTD.) 21 July 2023 (2023-07-21) See paragraphs [0031], [0088], [0146], [0148], [0179], [0183], [0185] and [0501]; claims 1-3 and 10; and figure 8. | 1,3,6-8,10-13,15-17 |
| Y | | 2,4-5,9,14 |
| Y | COBAN, Muhammed et al. Algorithm description of Enhanced Compression Model 10 (ECM 10). JVET-AE2025, Joint Video Experts Team (JVET) of ITU-T SG 16 WP 3 and ISO/IEC JTC 1/SC 29, 31st Meeting. Geneva, CH. pp. 1-82, 02 October 2023. See pages 9-11 and 22-23; and figures 4-5 and 17-19. | 2,4-5 |
| Y | KR 10-2017-0118956 A (THOMSON LICENSING) 25 October 2017 (2017-10-25) See paragraph [0084]. | 9 |
| Y | NASER, Karam et al. AHG12: CIIP extension with Intra Template Matching. JVET-AC0201-r2, Joint Video Experts Team (JVET) of ITU-T SG 16 WP 3 and ISO/IEC JTC 1/SC 29, 29th Meeting, by teleconference. pp. 1-4, 16 January 2023. See page 1. | 14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 March 2025** | **10 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/019984

C. DOCUMENTS CONSIDERED TO BE RELEVANT

| Category* | Citation of document, with indication, where appropriate, of the relevant passages | Relevant to claim No. |
|---|---|---|
| A | KR 10-2023-0159640 A (LG ELECTRONICS INC.) 21 November 2023 (2023-11-21) See paragraphs [0256]-[0257]; and claims 1-4. | 1-17 |

Form PCT/ISA/210 (second sheet) (July 2022)

**INTERNATIONAL SEARCH REPORT**
**Information on patent family members**

International application No.
**PCT/KR2024/019984**

| Patent document cited in search report | Publication date (day/month/year) | Patent family member(s) | Publication date (day/month/year) |
|---|---|---|---|
| KR 10-2023-0110237 A | 21 July 2023 | CN 117221603 A | 12 December 2023 |
| | | KR 10-2025-0011994 A | 22 January 2025 |
| | | KR 10-2741881 B1 | 16 December 2024 |
| | | US 12212742 B2 | 28 January 2025 |
| | | US 2025-0030849 A1 | 23 January 2025 |
| | | WO 2017-222237 A1 | 28 December 2017 |
| KR 10-2017-0118956 A | 25 October 2017 | CN 105120281 A | 02 December 2015 |
| | | CN 105120281 B | 18 January 2019 |
| | | EP 3668098 A1 | 17 June 2020 |
| | | JP 2022-172145 A | 15 November 2022 |
| | | JP 7519411 B2 | 19 July 2024 |
| | | KR 10-1834825 B1 | 06 March 2018 |
| | | KR 10-2024-0145048 A | 04 October 2024 |
| | | US 10178411 B2 | 08 January 2019 |
| | | US 2023-0051065 A1 | 16 February 2023 |
| | | WO 2010-087809 A1 | 05 August 2010 |
| KR 10-2023-0159640 A | 21 November 2023 | CN 117336470 A | 02 January 2024 |
| | | EP 3806475 A1 | 14 April 2021 |
| | | EP 3806475 B1 | 10 May 2023 |
| | | KR 10-2022-0140878 A | 18 October 2022 |
| | | KR 10-2745742 B1 | 20 December 2024 |
| | | US 11973963 B2 | 30 April 2024 |
| | | US 2024-0244233 A1 | 18 July 2024 |
| | | WO 2020-009556 A1 | 09 January 2020 |

Form PCT/ISA/210 (patent family annex) (July 2022)